# EUROPEAN PATENT APPLICATION

(11) **EP 4 660 454 A1**
(43) Date of publication of application: **10.12.2025**
(21) Application number: 24180567.0
(22) Date of filing: 06.06.2024
(51) Int. Cl.: F03D 80/80

(54) **SHROUD ASSEMBLY FOR WIND GENERATOR**

(71) Applicant: Wind and More ApS, 9990 Skagen Denmark (DK)
(72) Inventor: Johansen, Leif Kyhl, 9990 Skagen (DK)
(74) Representative: Dragsted Partners A/S

(57) **Abstract**

The present invention relates to a shroud assembly for a nacelle of a wind generator, the shroud assembly having a radial extension defined to be perpendicular to the centre axle of the wings of the wind generator and an axial extension defined to be parallel to the centre axis of the wind generator, the shroud assembly comprising a number of shroud elements, each shroud element comprising a first flange section and a second flange section, the first flange section being connected to the second flange section via a common section, and a first end section and a second end section, wherein the first flange section and the second flange section are arranged in an angle via the common section, and wherein the first flange section is arranged between the stator and a blade plane defined by the wings of the wind generator. The invention also relates to use of the shroud assembly for diverting the air flow and/or protecting the stator in the nacelle of a wind generator.

## Description

The present invention relates to a shroud assembly for a nacelle of a wind generator. The invention also relates to use of the shroud assembly for diverting the air flow and/or protecting the stator in the nacelle of a wind generator.

It is commonly known that the wind generator industry has been undergoing a major change over the last 20 years. Wind generators have dramatically increased in size and capacity. Furthermore, the generators are now placed in more and more difficult-to-access places, including mountains, at sea and just generally remote areas such as deserts. Obviously, strong wind is desirable, but often strong winds also results in a harsh environment in general. This could include e.g. high concentrations of salt in the air, sand, snow, moist and rain.

The surrounding environment plays a significant role in the overall profitability of a wind generator since it directly affects the downtime of the wind generator. The major part of the financial value of a wind generator is not only the capacity of the generator when wind is present, but also to a great extent the proper functioning of the wind generator in general without long out-of-service periods.

Repair work to be carried out in a nacelle of a wind generator is always an expensive task and should be avoided where possible. The work is even more difficult and expensive if the wind generator is positioned at a location with difficult access, e.g. on a mountain side, at sea, in a desert or similar. Hence changing from sudden breakdowns, i.e. from unplanned stops to stops due to routine maintenance, makes a major difference in the overall financial performance of the wind generator. Multiple tasks may be planned ahead of the stop and hence reduce downtime.

It is an object of the present invention to wholly or partly overcome the above disadvantages and drawbacks of the prior art. More specifically, it is an object to provide an improved shroud assembly that improves the lifespan of the generator, i.e. the stator and/or the rotor of the wind generator.

It is a further object of the present invention to provide an improved shroud assembly that reduces the risk of unscheduled repairs of the generator, i.e. the stator and/or the rotor of the wind generator.

The above objects, together with numerous other objects, advantages and features, which will become evident from the below description, are accomplished by a solution in accordance with the present invention by a shroud assembly for a nacelle of a wind generator, the shroud assembly having a radial extension defined to be perpendicular to the central axle of the wings of the wind generator and an axial extension defined to be parallel to the central axis of the wind generator, the shroud assembly comprising:
- a number of shroud elements, each shroud element comprising:
- a first flange section and a second flange section, the first flange section being connected to the second flange section via a common section, and
- a first end section and a second end section,

wherein the first flange section and the second flange section are arranged in an angle via the common section, and
wherein the first flange section is arranged between the stator and a blade plane defined by the wings of the wind generator.

In this way, the shroud assembly (also named "shroud" for short) changes the air flow inside the nacelle when the air flow is flowing substantially in an axial direction in the nacelle. Furthermore, the shroud provides protection for the stator from the surrounding environment, i.e. protection from both rain and moist as well as particles in the air. The protection provided by the shroud assembly ensures that less maintenance is needed, resulting in less downtime of the whole wind generator.

Also, the second flange section may be positioned at least partly between the stator and the nacelle wall.

In this way, the generator, i.e. the stator and the rotor, are protected in an additional direction. It is to be understood that other parts, e.g. of the nacelle structure, pipes, wires and the like, may also be positioned between the stator and the second flange. However, this does not affect the protection of the stator.

Furthermore, the first and/or the second flange section may comprise a mounting bracket.

In this way, a simple and efficient way of mounting the shroud assembly to the nacelle structure is provided. The mounting bracket may be bolted and/or glued to the individual shroud elements.

In addition, the mounting bracket of the first and/or the second flange section may comprise a magnet.

In this way, it is achieved that the affixing of the shroud assembly to the nacelle is carried out in a simple and reliable manner. The mounting is carried out without the need for drilling in metal parts. This is desirable in order to minimise the risk of metal parts being dropped on the stator or rotor.

Further, the shroud assembly may comprise 2-15 shroud elements, more preferably 3-13 shroud elements, and even more preferably 4-11 shroud elements.

In this way, it is achieved that the shroud elements have a dimension that may easily be handled inside the nacelle. Furthermore, each shroud element may have a weight that makes it easy to bring it from the ground to the nacelle. Yet further, the weight is so low that two workers may easily handle the elements inside the nacelle during installation.

Also, the shroud elements may be made of glass-reinforced plastic (GRP), glass fibre, carbon fibre, sheet metal or alloys thereof.

In this way, it is possible to manufacture the shroud elements in an easy and efficient manner. If made the shroud elements to be made from GRP, a mould may be made, thus further reducing manufacturing costs.

In addition, the first and/or the second end section of each shroud element may comprise an embossed area arranged in a plane substantially parallel to the general plane of the flange from which the area is embossed.

In this way, it is achieved that the shroud elements are aligned in a strong manner. The embossment facilitates that one shroud element is firmly aligned with a neighbouring shroud element.

Further, the end sections of the shroud elements may be glued and/or bolted together to join the shroud elements in order to form a shroud assembly.

In this way, it is achieved that the shroud element may be assembled in a manner that requires a minimum of tools in the nacelle. It is to be understood that due to the necessity of retrofitting the elements, i.e. install the shroud assembly in an existing wind generator, the shroud elements need to be able to be handled, i.e. moved around inside the nacelle and finally positioned in the desired position. When gluing the end sections of the shroud elements together, there is room for final adjustments of the position of the shroud elements. If bolts are also used, they may help keep the end sections of two neighbouring shroud elements together until the glue has cured.

Moreover, the shroud element may comprise winglets, diffusers and/or turbulators to change the direction of air flowing both along and/or transversal to the shroud assembly.

In this way, it is possible to adjust the flow of air and hence achieve the optimal flow that reduces the temperature of the stator as much as possible. When the surrounding temperature is between 0-30 degrees C, it is found that a reduction of around 5 degrees C is achievable even without special arrangements for directing the flow of air, i.e. only having a first and a second flange section.

Furthermore, the extension of each flange section may be 10-80 cm, more preferably 15-70 cm, and most preferably 20-60 cm, measured from the common section to the rim of each flange.

In this way, it is achieved that the stator may be fully covered in two directions by the two flange sections. In other words, the first flange section may protect, i.e. cover, the stator in a radial direction from the central axis according to the measures. The second flange section may protect, i.e. cover, the stator in a direction parallel to the central axis according to the measures.

Also, the shroud elements may form a substantially circular shroud assembly.

In this way, it is achieved that the shroud assembly is fully covering the stator in a 360-degree manner. The parts of the stator and the rotor are substantially equidistantly positioned around the central axis.

In addition, the diameter of the shroud assembly may be 200-800 cm, more preferably 250-700 cm, and most preferably 300-600 cm.

Furthermore, each end section of each shroud element may overlap a neighbouring shroud element by more than 5% of the neighbouring shroud element.

In this way, it is achieved that the contact surface between neighbouring shroud elements is sufficient to keep the shroud elements in position and ensure a firm and stiff connection.

Moreover, the shroud elements and hence the shroud assembly may be kept in position in relation to the nacelle by affixing the shroud elements to either the nacelle wall and/or mechanical components arranged inside the nacelle.

In this way, it is achieved that the shroud assembly as a whole may be affixed to various elements. It is to be understood that the walls of the nacelle only move very little in relation to the generator, i.e. the stator. Hence, it is possible to connect the shroud assembly to various parts of the nacelle, and not just to metal parts using magnets. It is to be understood that the shroud assembly may also be made an integral part of the nacelle walls when building new wind generators.

Finally, the invention also relates to use of the shroud assembly diverting the air flow and/or protecting the stator in the nacelle of a wind generator.

In this way, it is achieved that the stator and rotor are protected from the surrounding environment, e.g. rain, moist, snow as well as particles in the air. Furthermore, if an object in the nacelle is broken or loose and risks hitting the stator or rotor, the shroud will minimise the risk of such object coming into contact with the stator or rotor and therefore minimise the risk of damaging the stator or rotor.

Yet further, the shroud directs and controls part of the air flow in the nacelle. In particular, the airflow around the generator, i.e. the stator and the rotor, is controlled. The controlled airflow reduces the overall temperature of the stator and thus lowers the temperature load on the windings and their protective layer.

In another embodiment, the shroud assembly may cover the stator in the axial direction. In this way, it is achieved that the stator is protected from rain and particles that are directed towards the stator in a direction substantially perpendicular to the main axle of the wind generator. It is to be understood that the main axle of the generator may be slightly tilted in relation to the horizontal plane. Hence, it is noted that the main axle is substantially horizontal. In the same way, the plane defined by all three wings of the wind generator is substantially vertical, i.e. typically slightly tilted, in order to be arranged perpendicularly to the main axle. The main axle could also just be defined as the central axis since some wind generators do not have a main axle as such but still have a well-defined central axis extending from the centre of the rotor hub through the centre of the generator. The centre of the generator is the same as the centre of the rotor and the stator of the generator. Hence, the centre of the rotor and the stator is also generally the centre of the outer wall of the nacelle as a whole.

The invention and its many advantages will be described in more detail below with reference to the accompanying schematic drawings, which for the purpose of illustration show some non-limiting embodiments and in which:
Fig. 1 shows a schematic view of a nacelle and components inside the nacelle in a partly cut-through view,
Fig. 2 shows in schematic view a shroud assembly according to the invention,
Fig. 3 is a perspective view of a shroud element,
Fig. 4 shows in a partly cross-sectional view the mounting shroud elements to a part of the nacelle, and
Fig. 5 shows part of the airflow inside the nacelle.

All the figures are highly schematic and not necessarily to scale, and they show only those parts which are necessary in order to elucidate the invention, other parts being omitted or merely suggested.

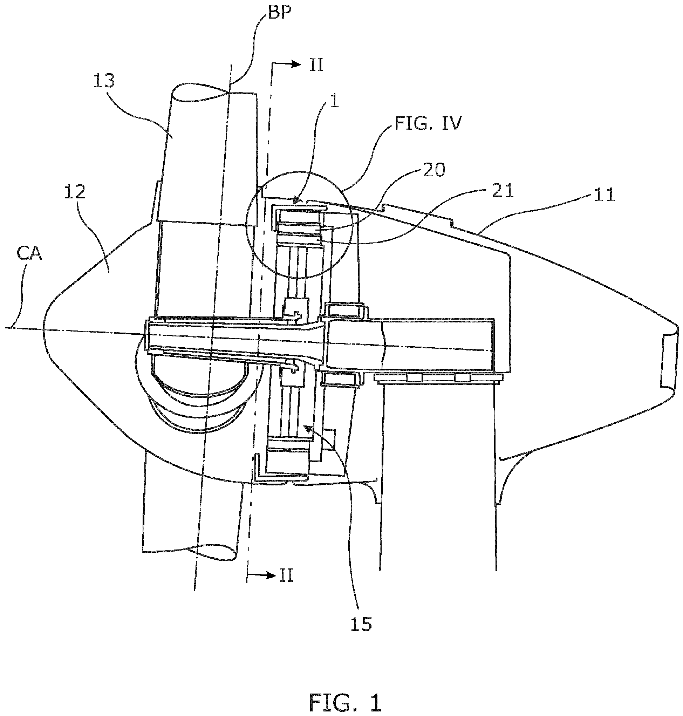

Fig. 1 shows a schematic view of a shroud assembly 1 arranged in a nacelle of a wind generator. The wind generator comprises a hub 12 from which three blades 13 extend (only partly shown). The three blades 13 define a blade plane BP oriented perpendicularly to a central axis CA. The central axis CA is concentric with and directed in the same direction as the centre of the central axle CA, also named the main axle. Hence, the central axis CA, the axis of the central axle CA and the central axis of the main axle is the same.

The shroud assembly 1 is seen positioned in the vicinity of a generator 15 having a stator and a rotor.

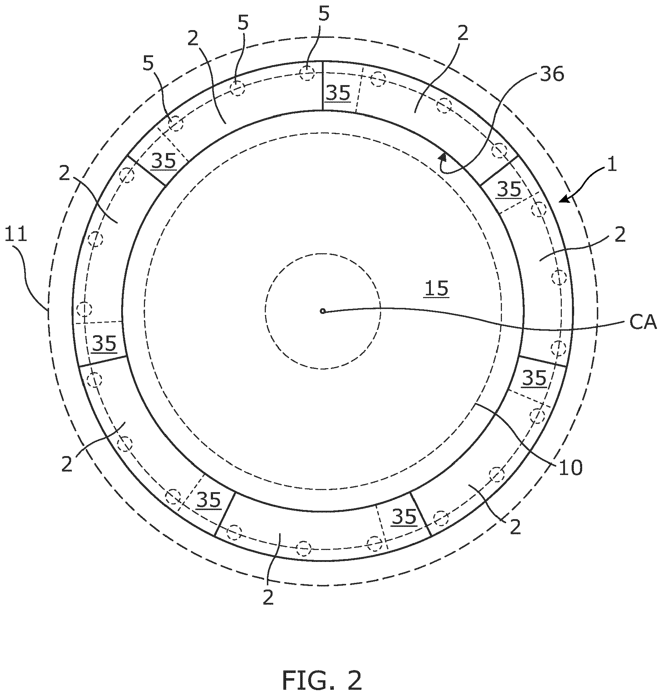

Fig. 2 shows a front view of the shroud assembly 1 comprising a number of shroud elements 2. At each of the shroud elements 2, a number of magnets 5 for connecting to a flange of a nacelle part is shown. Indicated by dotted lines, a structure 10 of the nacelle is shown. This is the structure to which the shroud assembly 1 will be attached when fully mounted in the nacelle. It is to be understood that the shroud assembly 1 may be mounted in various ways as long as it is kept in position in relation to the generator i.e. the stator and the rotor (not shown). Indicated by radial, dotted lines, the overlapping sections of neighbouring shroud elements 2 are shown, i.e. an embossed area 35 overlapped by a neighbouring shroud element 2. A rim 36 of the first flange is shown as substantially circular for the full shroud assembly 1 and projecting towards the centre of the generator (not shown) i.e. the main axle/central axis CA (also shown in Fig. 1) of the generator. The nacelle wall 11 is shown by a dotted line encircling the shroud assembly 1. It is to be understood that the wall 11 of the nacelle in reality is not fully circular. It is shown that the shroud assembly has a radial extension from the central axis CA to the outer perimeter of the shroud assembly 1. The outer perimeter is generally defined by the second flange section (not visible).

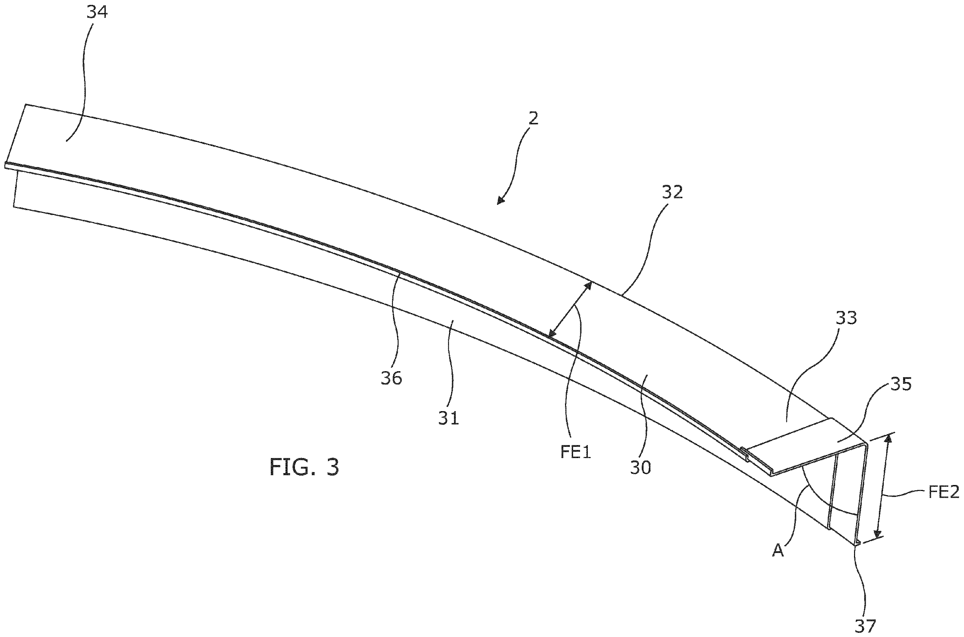

Fig. 3 shows in a perspective view a shroud element 2. The shroud element 2 comprises a first flange section 30 and a second flange section 31 connected via a common section 32. The first flange section 30 and the second flange section is arranged in angle A to each other. In the present embodiment the angle is defined in the curvature of the common section 32. In another embodiment each flange section may have further bends or angles to define multiple flange sections along each flange extension FE1, FE2. The shroud element 2 further comprises a first end section 33 and a second end section 34. In this embodiment, the first end section 33 comprises an embossed area 35. It is shown that the shroud element 2 has a longitudinal extension following a curvature. Putting together a number of shroud elements 2 results in a shroud assembly 1 formed substantially as a circle as shown in Fig. 2. In Fig. 2, seven shroud elements 2 are used, but it will be understood that different numbers may be used, e.g. 9. The first flange section 30 has a first flange extension FE1, and the second flange section 31 has a second flange extension FE2. In the present embodiment, the first and the second flange extension FE1, FE2, are the same, but it will be understood by the skilled person that the flange extensions FE1, FE2 may be different. Each flange extension FE1, FE2 extends from the common section 32 to the rim 36, 37 of the respective flange section 30, 31. The first flange section 30 has the first rim 36, and the second flange section 31 has a second rim 37. When the shroud elements 2 are combined to form a shroud assembly 1, the distance of the flange extension FE1 i.e. the distance from the common section 32 to the rim 36 of the first flange section 30 is the same all the way round the shroud assembly 1. Similarly, the second flange extension FE2 of the second flange section 31 is substantially the same measured in the same direction at any point of the shroud assembly 1. It is seen that the first flange section 30 is arranged approximately in a 90-degree angle to the second flange section 31. This angle may be different in other embodiments. It is shown that the rim 36, 37 of the first and second flange sections 30, 31 comprises a small bent to the outermost part. In this way, water may be directed to flow along the perimeter of the shroud assembly 1 and eventually be expelled from the shroud assembly 1 in the lower region of the shroud assembly 1. Thus, the shroud assembly 1 guides the water to a region where it minimises the risk of coming into contact with the stator and/or the rotor.

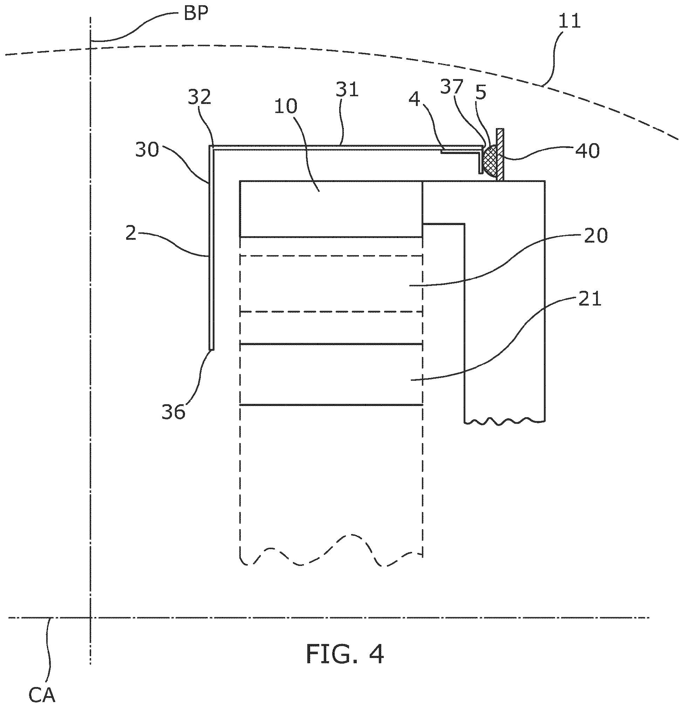

Fig. 4 shows a highly schematic and partly cross-sectional view of the embodiment shown in Fig. 1. The shroud assembly 1 is seen connected to the nacelle structure 10 via a projection 40 from the nacelle structure 10. The magnets 5 are attached to the projection 40, and in this way each shroud element 2 and consequently the whole shroud assembly 1 is held in position. The magnets 5 (only one shown) is connected to the shroud element 2 by a bracket 4. This may be a metal bracket but could also be an integral part of the shroud element 2. The bracket 4 is attached to the second flange section 31 near the rim 37, and the second flange section 31 is connected to the first flange section 30 via the common section 32. It is shown that the second flange section 31 is positioned between a wall 11 of the nacelle and a stator 20 and a rotor 21. It is shown that parts of the nacelle structure 10 may be positioned between the shroud assembly 1 and the nacelle wall 11, but these parts are not arranged or designed to serve as protection in the same way as the shroud assembly 1. It is shown that the second flange section 31 is substantially parallel to the central axis CA. The first flange section 30 is substantially parallel to a blade axis BA, and the substantially circular rim 36 is directed towards the centre of the generator 15 (see also Fig. 2). Hence, the shroud assembly 1 protects the rotor 21 from water, fluids and particles in general in two directions. The two directions are substantially perpendicularly arranged to each other.

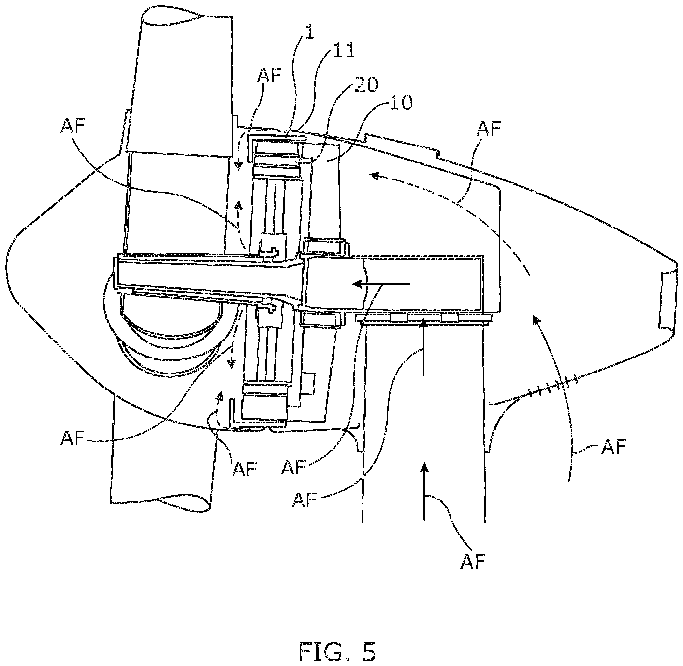

Fig. 5 shows, as does Fig. 1, a partly cross-sectional view of the nacelle of a wind generator. The shroud assembly 1 is positioned between the wall 11 of the nacelle supported by the nacelle structure 10 (no details such as magnets are shown), the stator 20 and the rotor 21. This position of the shroud assembly 1 guides the air flow shown by arrows AF in the nacelle in a way that reduces the temperature of the stator 20. It is shown that part of the flow of air is dragged from the tower of the wind generator and part via openings in the nacelle wall 11. Hence, the shroud assembly 1 ensures a flow of air AF to pass the rotor 21. Reduced temperature causes the windings to increase their lifespan and minimises the risk of failure.

Although the invention has been described above in connection with preferred embodiments of the invention, it will be evident to a person skilled in the art that several modifications are conceivable without departing from the invention as defined by the following claims.

## Claims

1. A shroud assembly (1) for a nacelle of a wind generator, the shroud assembly having a radial extension defined to be perpendicular to the centre axle of the wings of the wind generator and an axial extension defined to be parallel to the centre axis of the wind generator, the shroud assembly comprising:
- a number of shroud elements, each shroud element comprising:
- a first flange section and a second flange section, the first flange section being connected to the second flange section via a common section, and
- a first end section and a second end section,
wherein the first flange section and the second flange section are arranged in an angle (A) via the common section, and
wherein the first flange section is arranged between the stator and a blade plane (BP) defined by the wings of the wind generator.

2. A shroud assembly (1) according to claim 1, wherein the second flange section is positioned at least partly between the stator and the nacelle wall.

3. A shroud assembly (1) according to claim 1 or 2, wherein the first and/or the second flange section comprises a mounting bracket.

4. A shroud assembly (1) according to claim 3, wherein the mounting bracket of the first and/or the second flange section comprises a magnet.

5. A shroud assembly (1) according to claim 1 or 2, wherein the shroud assembly comprises 2-15 shroud elements, more preferably 3-13 shroud elements, and even more preferably 4-11 shroud elements.

6. A shroud assembly (1) according to any of the preceding claims, wherein the shroud elements are made of glass-reinforced plastic (GRP), glass fibre, carbon fibre, sheet metal or alloys thereof.

7. A shroud assembly (1) according to any of the preceding claims, wherein the first and/or the second end section of each shroud element comprises an embossed area arranged in a plane substantially parallel to the general plane of the flange from which the area is embossed.

8. A shroud assembly (1) according to any of the preceding claims, wherein the end sections of the shroud elements are glued and/or bolted together to join the shroud elements to form a shroud assembly.

9. A shroud assembly (1) according to any of the preceding claims, wherein the shroud element comprises winglets, diffusers and/or turbulators to change the direction of air flowing both along and/or transversal to the shroud assembly.

10. A shroud assembly (1) according to any of the preceding claims, wherein the extension of each flange section is 10-80 cm, more preferably 15-70 cm, and most preferably 20-60 cm, measured from the common section to the rim of each flange.

11. A shroud assembly (1) according to any of the preceding claims, wherein the shroud elements form a substantially circular shroud assembly.

12. A shroud assembly (1) according to claims 2-8, wherein the diameter of the shroud assembly is 200-800 cm, more preferably 250-700 cm, and most preferably 300-600 cm.

13. A shroud assembly (1) according to any of the preceding claims, wherein each end section of each shroud element overlaps a neighbouring shroud element by more than 5% of the neighbouring shroud element.

14. A shroud assembly (1) according to any of the preceding claims, wherein the shroud elements and hence the shroud assembly are kept in position in relation to the nacelle by affixing the shroud elements to either the nacelle wall and/or mechanical components arranged inside the nacelle.

15. Use of the shroud assembly according to any of claims 1-14 for diverting the air flow and/or protecting the stator in the nacelle of a wind generator.
